(19) Europäisches Patentamt
European Patent Office
Office européen des brevets

(11) **EP 3 143 712 B1**

(12) **EUROPÄISCHE PATENTSCHRIFT**

(45) Veröffentlichungstag und Bekanntmachung des Hinweises auf die Patenterteilung:
**31.01.2018 Patentblatt 2018/05**

(21) Anmeldenummer: **15708818.8**

(22) Anmeldetag: **09.03.2015**

(51) Int Cl.:
*H04B 17/11* (2015.01)      *G01S 7/40* (2006.01)
*G01S 13/00* (2006.01)      *H04B 17/20* (2015.01)

(86) Internationale Anmeldenummer:
**PCT/EP2015/054822**

(87) Internationale Veröffentlichungsnummer:
**WO 2015/172907 (19.11.2015 Gazette 2015/46)**

(54) **VERFAHREN ZUR KALIBRIERUNG EINES MIMO-RADARSENSORS FÜR KRAFTFAHRZEUGE**

METHOD FOR CALIBRATING A MIMO RADAR SENSOR FOR MOTOR VEHICLES

PROCÉDÉ D'ÉTALONNAGE D'UN CAPTEUR RADAR MIMO POUR VÉHICULES AUTOMOBILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2014 DE 102014208899**

(43) Veröffentlichungstag der Anmeldung:
**22.03.2017 Patentblatt 2017/12**

(73) Patentinhaber: **Robert Bosch GmbH**
**70442 Stuttgart (DE)**

(72) Erfinder: **LOESCH, Benedikt**
**70195 Stuttgart (DE)**

(56) Entgegenhaltungen:
**WO-A1-2012/089385**

• **GUETLEIN JOHANNA ET AL: "Calibration strategy for a TDM FMCW MIMO radar system", 2013 IEEE INTERNATIONAL CONFERENCE ON MICROWAVES, COMMUNICATIONS, ANTENNAS AND ELECTRONIC SYSTEMS (COMCAS 2013), IEEE, 21. Oktober 2013 (2013-10-21), Seiten 1-5, XP032533309, DOI: 10.1109/COMCAS.2013.6685266 [gefunden am 2013-12-16]**

**EP 3 143 712 B1**

**Beschreibung**

Die Erfindung betrifft ein Verfahren zur Kalibrierung eines Antennendiagramms eines MIMO-Radarsensors mit $N_{tx}$ Sende-Antennenelementen und $N_{rx}$ Empfangs-Antennenelementen.

Stand der Technik

In Fahrerassistenzsystemen für Kraftfahrzeuge, beispielsweise in Systemen zur automatischen Abstandsregelung oder in Kollisionswarnsystemen, werden häufig Radarsensoren zur Erfassung des Verkehrsumfelds eingesetzt. Neben dem Abstand und der Relativgeschwindigkeit ist in der Regel auch der Azimutwinkel der georteten Objekte von Bedeutung, da beispielsweise bei der Ortung von vorausfahrenden Fahrzeugen anhand des Azimutwinkels eine Fahrspurzuordnung ermöglicht wird. Auch der Elevationswinkel der georteten Objekte kann von Bedeutung sein, da er eine Aussage über die Relevanz des Ziels erlaubt, beispielsweise ob das Ziel überfahrbar oder unterfahrbar ist oder ein potentiell kollisionsgefährdendes Hindernis darstellt.

Azimut- und Elevationswinkel der Ziele können aus Amplituden und/oder Phasenunterschieden von Sende- und/oder Empfangsantennen eines Antennenarrays ermittelt werden. Um die Genauigkeit und Trennfähigkeit der Winkelschätzung zu verbessern, können Radarsensoren eingesetzt werden, die nach dem MIMO-Prinzip (Multiple Input Multiple Output) arbeiten. Dabei werden anders als bei klassischen SIMO-Radarsensoren (Single Input Multiple Output), die mit einer Sendeantenne und mehreren Empfangsantennen arbeiten, mehrere Sende-Antennenelemente und mehrere Empfangs-Antennenelemente verwendet. Um die Signale der Sende-Antennenelemente an den Empfangs-Antennenelementen trennen zu können, müssen die Sendesignale unkorreliert (orthogonal) sein. Das kann über Zeit-, Frequenz- oder Codemultiplex erreicht werden.

Bei der Winkelschätzung werden die Empfangssignale mit einem vorher vermessenen winkelabhängigen Antennendiagramm verglichen. Für den Fall, dass nur ein einziges Ziel geortet wird (oder mehrere Ziele, die sich jedoch anhand des Abstands und der Relativgeschwindigkeit klar voneinander unterscheiden lassen), ergibt sich der geschätzte Winkel als Position der besten Übereinstimmung zwischen dem Empfangssignal und dem Antennendiagramm. Für den allgemeinen Fall der Mehrzielschätzung sind spezielle Schätzalgorithmen bekannt, die Schätzwerte für die Ortungswinkel aller beteiligten Ziele liefern.

Bisher ist es üblich, die Antennendiagramme für jeden einzelnen Sensor werkseitig vor Inbetriebnahme des Sensors zu vermessen. Wenn der Radarsensor in einem Kraftfahrzeug verbaut wird, beispielsweise hinter einem Stossfänger oder hinter einer Reliefstruktur wie beispielsweise einem Emblem der Kraftfahrzeugmarke, so kann es zu Verfälschungen des Antennendiagramms kommen, die systematische Fehler bei der Winkelschätzung verursachen. Das gilt insbesondere für die Sende-Antennendiagramme bei MIMO-Radarsensoren.

Aus GUETLEIN JOHANNA ET AL: "calibration strategy for a TDM FMCW MIMO radar system", 2013 IEEE INTERNATIONAL CONFERENCE ON MICROWAVES, COMMUNICATIONS, ANTENNAS AND ELECTRONIC SYSTEMS (COMCAS 2013) IEEE, 21. Oktober 2013 (2013-10-21), Seiten 1-5, XP032533309, DOI 10.1109/COMCAS.2013.6685266, ist ein Verfahren nach dem Oberbegriff des Anspruchs 1 bekannt.

Ein Beispiel eines MIMO Radarsensors wird in WO 2012/089385 A1 beschrieben.

Offenbarung der Erfindung

Aufgabe der Erfindung ist es, eine genauere Winkelschätzung mit MIMO-Radarsensoren zu ermöglichen.

Diese Aufgabe wird erfindungsgemäß gelöst durch ein Verfahren zur Kalibrierung eines Antennendiagramms eines MIMO-Radarsensors mit $N_{tx}$ Sende-Antennenelementen und $N_{rx}$ Empfangs-Antennenelementen, das die folgenden Schritte umfasst:

vor Inbetriebnahme des Radarsensors:

- Speichern eines Antennendiagramms, das jedem von mehreren Winkeln θ einen jeweiligen Steuerungsvektor $\underline{a}(\theta)$ zuordnet, der sich zusammensetzt aus einem Sende-Steuerungsvektor $\underline{a}_{tx}(\theta)$ und einem Empfangs-Steuerungsvektor $\underline{a}_{rx}(\theta)$,

nach Inbetriebnahme:

- Ausführen einer Radarmessung zur Ortung eines Objekts,

- Prüfen, ob das geortete Objekt ein Einzelziel oder ein Mehrfachziel ist,

- wenn es ein Einzelziel ist:

- Ausführen einer SIMO-Messung mit jedem der Sende-Antennenelemente,

- Schätzen des Winkels θ des Objekts anhand der Messergebnisse,

- Berechnen einer ersten, von den Komponenten des Sende-Steuerungsvektors $\underline{a}_{tx}(\theta)$ abhängigen Vergleichsgröße für jedes Sende-Antennenelement,

- Berechnen einer zweiten, von den Ergebnissen der SIMO-Messungen abhängigen Vergleichsgröße für jedes Sende-Antennenelement, und

- Korrigieren des Sende-Steuerungsvektors $\underline{a}_{tx}(\theta)$ anhand einer bekannten Beziehung zwischen den ersten und zweiten Vergleichsgrößen für jedes Sende-Antennenelement.

Dieses Verfahren erlaubt eine Kalibrierung oder Nachkalibrierung des Sende-Antennendiagramms auch noch nach Inbetriebnahme des Radarsensors, so dass Störeinflüsse, die sich erst beim Verbau des Radarsensors im Fahrzeug ergeben und deshalb bei der werkseitigen Kalibrierung noch nicht erfasst werden können, nachträglich kompensiert werden können. Wenn beispielsweise während der Fahrt mit dem Kraftfahrzeug, in dem der Radarsensor verbaut ist, ein einzelnes Objekt unter einem bestimmten Azimutwinkel θ geortet wird, so kann anhand des oben beschriebenen Verfahrens das Sende-Antennendiagramm für diesen speziellen Azimutwinkel nachkalibriert werden. Da beim Betrieb des Kraftfahrzeugs im Laufe der Zeit Einzelobjekte unter verschiedenen Azimutwinkeln θ geortet werden, erhält man so nach und nach ein korrigiertes (kalibriertes) Sende-Antennendiagram für den gesamten Azimutwinkelbereich. Die Kalibrierungsphase kann dann abgeschlossen werden. Wahlweise ist es jedoch auch möglich, die Nachkalibrierung ständig fortzusetzen oder in gewissen Intervallen zu wiederholen, um auch alterungsbedingten Änderungen des Antennendiagramms Rechnung zu tragen.

Vorteilhafte Weiterbildungen und Ausgestaltungen der Erfindung sind in den Unteransprüchen angegeben.

Bei dem oben beschriebenen Verfahren wird nur der Sende-Teil des Antennendiagramms kalibriert. Gegenstand der Erfindung ist jedoch auch ein analog ablaufendes Verfahren, bei dem mit Hilfe mehrerer MISO-Messungen (Multiple Input Single Output) der Empfangs-Teil des Antennendiagramms kalibriert wird.

Gegenstand der Erfindung ist außerdem ein Radarsensor für Kraftfahrzeuge, in dem eines der oben beschriebenen Verfahren implementiert ist.

Im folgenden wird ein Ausführungsbeispiel anhand der Zeichnung näher erläutert.

Es zeigen:

Fig. 1     ein Diagramm eines MIMO-Radarsensors mit zwei Sende-Antennenelementen und vier Empfangs-Antennenelementen;

Fig. 2     ein Diagramm des Radarsensors nach Fig. 1, nach Verbau in einem Kraftfahrzeug und während der Ortung eines Objekts;

Fig. 3     ein Flussdiagramm eines Verfahrens zur Kalibrierung des Radarsensors.

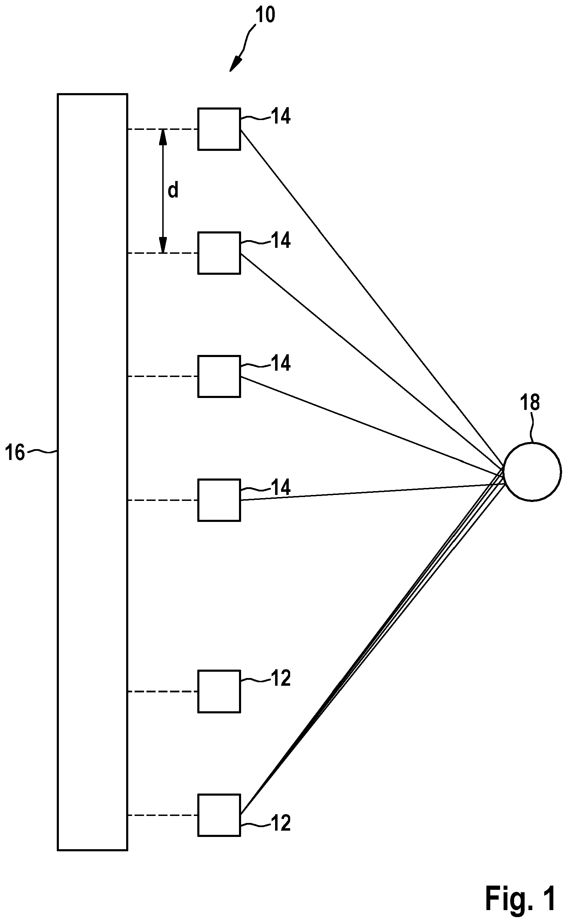

In Fig. 1 ist ein Diagramm eines sehr einfachen Beispiels eines (MIMO) Radarsensors 10 dargestellt, der in diesem Beispiel nur zwei Sende-Antennenelemente 12 und vier Empfangs-Antennenelemente 14 aufweist. Die Sende-Antennenelemente 12 werden von einer Steuer- und Auswerteeinheit 16 gespeist und emittieren Radarsignale, die an einem Objekt 18 reflektiert und von jedem der Empfangs-Antennenelemente 14 empfangen werden. Die empfangenen Signale werden in der Steuer- und Auswerteeinheit 16 getrennt ausgewertet.

Lediglich aus Gründen der Übersichtlichkeit ist hier ein bistatisches Antennensystem dargestellt worden, bei dem die Sende-Antennenelemente 12 von den Empfangs-Antennenelementen 14 verschieden sind. In der Praxis kann auch ein monostatisches Antennenkonzept benutzt werden, bei dem zum Senden und zum Empfangen die gleichen Antennenelemente benutzt werden. Auch die Anzahl der Sende- und Empfangs-Antennenelemente kann in der Praxis deutlich größer sein als in dem hier gezeigten Beispiel.

In diesem Beispiel sind die Empfangs-Antennenelemente 14 in gleichmäßigen Abständen auf einer Geraden angeordnet (ULA; Uniform Linear Array). Das gleiche gilt auch für die Sende-Antennenelemente 12, wobei die Sende- und Empfangs-Antennenelemente nicht notwendigerweise auf derselben Geraden angeordnet sein müssen. Wenn der Radarsensor zur Messung von Azimutwinkeln der Objekte eingesetzt werden soll, verlaufen die Geraden, auf denen die Antennenelemente angeordnet sind, waagerecht. Bei einem Sensor zur Messung von Elevationswinkeln wären die Antennenelemente hingegen auf vertikalen Geraden angeordnet. Denkbar ist auch zweidimensionales Antennenarray, mit dem sowohl Azimutwinkel als auch Elevationswinkel gemessen werden können.

Im gezeigten Beispiel wird der Radarsensor 10 im Zeitmulitplex-Verfahren betrieben. Das heißt, dass zu jedem Zeitpunkt nur eines der $N_{tx}$ (= 2) Sende-Antennenelemente 12 aktiv ist. Die Aktivitätsphasen der einzelnen Antennenelemente wechseln einander zyklisch ab. In Fig. 1 ist symbolisch der Fall dargestellt, in dem nur das untere der beiden Sende-Antennenelemente 12 aktiv ist.

Alternativ könnte der Radarsensor auch im Frequenzmulitplex-Verfahren betrieben werden. Dann wären alle Sende-Antennenelemente 12 gleichzeitig aktiv, würden jedoch mit leicht verschiedenen Frequenzen arbeiten, so dass sich die Signale der verschiedenen Sende-Antennenelemente empfangsseitig wieder trennen lassen.

Eine weitere Möglichkeit wäre das Codemultiplex-Verfahren. Dabei wird dem von jedem der Sende-Antennenelemente 12 gesendeten Signal ein bestimmter Code aufmoduliert, und auf der Empfangsseite werden die Signale durch codeselektive Filterung voneinander getrennt.

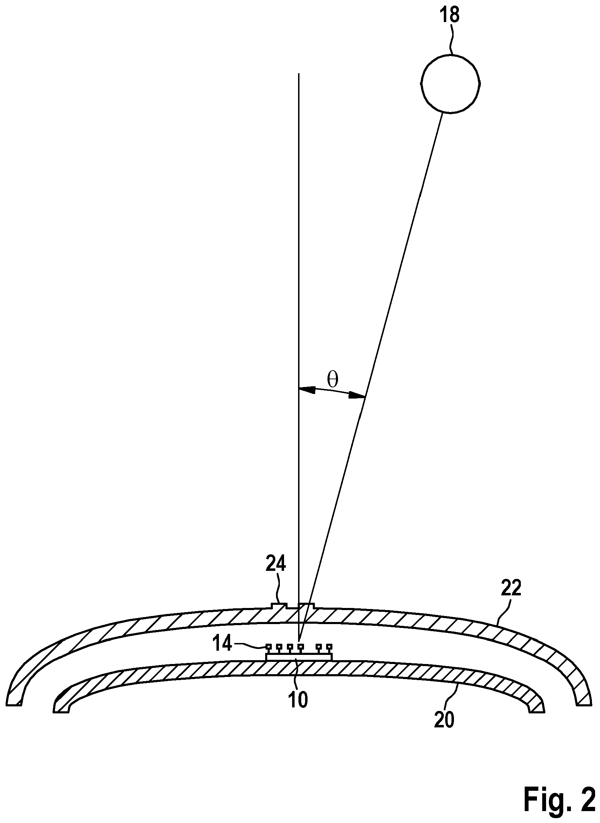

Im folgenden soll zu Erläuterungszwecken das Zeitmultiplex-Verfahren betrachtet werden. In einem einfachen Signalmodell kann angenommen werden, dass das Objekt 18 ein punktförmiges Streuzentrum ist, an dem das von dem aktiven Sende-Antennenelement 12 emittierte Signal als Kugelwelle gestreut wird, die dann die verschiedenen Empfangs-Antennenelemente 14 erreicht. In Fig. 1 ist allerdings der Abstand zwischen dem Radarsensor 10 und dem Objekt 18 unrealistisch klein. In der Praxis ist dieser Abstand so groß, dass die Abmessungen des Radarsensors 10 im Vergleich zum Objektabstand vernachlässigbar klein sind. Etwas realistischere Verhältnisse zeigt Fig. 2, wo sich das Objekt 18 in einem größeren Abstand vor der Frontpartie eines Kraftfahrzeugs 20 befindet, an welcher der Radarsensor 10 angeordnet ist. Die am Ort des Radarsensors einlaufenden Radarwellen können dann in guter Näherung als ebene Wellen betrachtet werden, die alle Empfangs-Antennenelemente 14 praktisch unter demselben Einfallswinkel, dem (Azimut-) Winkel θ des Objekts 18, erreichen.

Mit $\underline{x}n$ soll der vierkomponentige Vektor bezeichnet werden, dessen Komponenten ($X_{n,1}$, $X_{n,2}$, $X_{n,3}$, $X_{n,4}$) die komplexen Amplituden der Signale angeben, die von dem n-ten Sende-Antennenelement 12 gesendet werden und von den vier Empfangs-Antennenelementen 14 empfangen werden. Wenn d der Abstand von Antennenelement zu Antennenelement ist, λ die Wellenlänge der Radarstrahlung und $s = X_{n,1}$ die (zeitabhängige) komplexe Amplitude des Signals ist, das von dem ersten der Empfangs-Antennenelemente 14 empfangen wird (beispielsweise dem am weitesten rechts gelegenen Antennenelement in Fig. 2), so gilt aufgrund der Lauflängenunterschiede zwischen den Signalen, die die verschiedenen Empfangs-Antennenelemente 14 erreichen, die folgende Beziehung:

$$\underline{x}n(\theta) = s \; (1, \; e^{-2\pi i(d/\lambda)\sin(\theta)}, \; e^{-2\pi i(2d/\lambda)\sin(\theta)}, \; e^{-2\pi i(3d/\lambda)\sin(\theta)},)^T = s \; \underline{a}_{rx}(\theta)$$

$$(1)$$

Das hochgestellte Symbol "T" soll die Transposition bezeichnen, da Vektoren hier als Zeilenvektoren geschrieben werden aber als Spaltenvektoren betrachtet werden sollen. Der Vektor $\underline{a}_{rx}$ wird als Empfangs-Steuerungsvektor bezeichnet. Dieser Steuerungsvektor gibt die geometrischen Eigenschaften und Wellenausbreitungseigenschaften des jeweils betrachteten Empfangs-Antennenarrays an. Ein solcher Steuerungsvektor lässt sich nicht nur für ULA-Antennenarrays, sondern ganz allgemein auch für andere Antennenkonfigurationen definieren.

Entsprechend kann man auch für das Array der (in diesem Beispiel nur zwei) Sende- Antennenelemente 12 einen Steuerungsvektor $\underline{a}_{tx}$ definieren, der in diesem Beispiel im wesentlichen die Lauflängenunterschiede der optischen Pfade von den Sende-Antennenelementen 12 zum Objekt 18 angeben würde.

Für das gesamte MIMO-Antennenarray erhält man den Steuerungsvektor

$$\underline{a}(\theta) = \underline{a}_{tx}(\theta) \; * \; \underline{a}_{rx}(\theta) \qquad\qquad\qquad (2)$$

Das Symbol * bedeutet hier das Kronecker-Produkt. Im hier betrachteten Beispielfall gilt also:

$$\underline{a}(\theta) \quad = \quad (a_{tx,1} \; a_{rx,1} \; , \; a_{tx,1} \; a_{rx,2} \; , \; a_{tx,1} \; a_{rx,3} \; , \; a_{tx,1} \; a_{rx,4} \; ,$$

$$a_{tx,2} \; a_{rx,1} \; , \; a_{tx,2} \; a_{rx,2} \; , \; a_{tx,2} \; a_{rx,3} \; , \; a_{tx,2} \; a_{rx,4})^T$$

$$(3)$$

Die empfangenen Signale bilden einen Vektor $\underline{x}$ mit $N_{tx} \, N_{rx}$ Komponenten (8 Komponenten in diesem Beispiel), und es gilt

$$\underline{x}(\theta) = s\ \underline{a}(\theta) \qquad (4)$$

Die Kenntnis des Steuerungsvektors $\underline{a}(\theta)$ erlaubt es, eine (unter geeigneten Bedingungen eindeutige) Beziehung zwischen dem Winkel $\theta$ des Objekts und den empfangenen Signalen $\underline{x}$ herzustellen und aus den Amplituden- und Phasenbeziehungen der empfangenen Signale auf den Azimutwinkel $\theta$ des Objekts zu schließen. Da in der Praxis die empfangenden Signale jedoch mehr oder weniger verrauscht sein werden, lässt sich der Azimutwinkel nicht exakt berechnen sondern lediglich schätzen, beispielsweise mit Hilfe einer Maximum-Likelihood-Schätzung.

Wenn man diese Prinzip auf Mehrzielschätzungen verallgemeinert, wird aus dem einzelnen Winkel $\theta$ ein Vektor $\underline{\theta}$, dessen Komponenten die Winkel der verschiedenen Ziele angeben, aus dem Steuerungsvektor $\underline{a}$ wird eine Steuerungsmatrix A, und es gilt die Beziehung

$$\underline{x} = A\ \underline{\theta} \qquad (5)$$

Im Prinzip kann für einen gegebenen Radarsensor das Antennendiagramm, d.h. die Gesamtheit aller Steuerungsvektoren $\underline{a}(\theta)$ für alle in Frage kommenden Azimutwinkel $\theta$ vor Inbetriebnahme des Sensors vermessen werden. In dem in Fig. 2 gezeigten Beispiel ist jedoch der Radarsensor 10 hinter einem Stoßfänger 22 des Kraftfahrzeugs verbaut, und dieser Stoßfänger 22 weist zudem noch ein bestimmtes Relief 24 auf, beispielsweise weil ein Emblem der Kraftfahrzeugmarke eingeprägt oder herausgeprägt ist. Da die optische Dichte des Stoßfängers von der optischen Dichte der Luft verschieden ist, kommt es durch Brechung der Radarwellen am und im Stoßfänger 22 zu Lauflängenunterschieden, die einen Einfluss auf das Antennendiagramm haben. Dieser Einfluss ist vom genauen Einbauort des Radarsensors relativ zu dem Relief 24 abhängig und lässt sich deshalb nur schwer rechnerisch kompensieren, zumal auch Effekte wie z. B. eine Verschmutzung des Stossfängers das Antennendiagramm weiter verfälschen können.

Ziel der Erfindung ist es nun, einen Weg zu finden, das Antennendiagramm nachträglich, nach dem Einbau des Radarsensors in das Fahrzeug, so zu kalibrieren, dass solche Verfälschungen des Antennendiagramms nicht zu nennenswerten Fehlern bei der Winkelschätzung führen.

Zunächst soll eine Möglichkeit beschrieben werden, den Sende-Steuerungsvektor $\underline{a}_{tx}(\theta)$ nachzukalibrieren. Dabei ist es zweckmäßig, relative Steuerungsvektoren $\underline{a}'_{tx}(\theta)$ und $\underline{a}'_{rx}(\theta)$ zu definieren:

$$\underline{a}'_{tx}(\theta) := \underline{a}'_{tx}(\theta) / a_{tx,1}(\theta) \qquad (6)$$

und

$$\underline{a}'_{rx}(\theta) := a_{tx,1}(\theta)\ \underline{a}_{rx}(\theta) \qquad (7)$$

wegen Gleichung (2) gilt dann

$$\underline{a}(\theta) = \underline{a}'_{tx}(\theta) * \underline{a}'_{rx}(\theta) \qquad (8)$$

da sich der Faktor $\underline{a}'_{tx}(\theta)$ heraus kürzt. Eine Nachkalibrierung des relativen Sende-Steuerungsvektors $\underline{a}'_{tx}(\theta)$ ist deshalb zu einer Nachkalibrierung des ursprünglichen Sende-Steuerungsvektors $\underline{a}_{tx}(\theta)$ äquivalent.

Die Qualität einer Winkelschätzung wird durch die sogenannte Gütefunktion $q(\underline{\theta})$ beschrieben. Diese Funktion ist ein Maß für die Wahrscheinlichkeit, dass die mit dem Schätzalgorithmus ermittelten Schätzwerte den tatsächlichen Winkelpositionen der georteten Objekte entsprechen. Für den allgemeinen Fall einer Mehrzielschätzung, bei der mehrere Ziele, die anhand ihrer Abstände und Relativgeschwindigkeiten nicht unterscheidbar sind, unter unterschiedlichen Winkeln $\theta_j$ geortet werden, ist die Gütefunktion gegeben durch die Gleichung

$$q^2(\underline{\theta}) = \underline{x}^H P_A(\theta)\ \underline{x} \qquad (9)$$

Darin ist $\underline{x}$ der Vektor mit den verschiedenen Kombinationen von Sende- und Empfangs-Antennenelementen erhaltenen Signale, $\underline{x}^H$ der hermitesch konjugierte Vektor zu $\underline{x}$, und $P_A(\underline{\theta}) = A(A^H A)^{-1} A^H$, wobei A die Steuerungsmatrix ist, die die Steuerungsvektoren aller Ziele enthält. Gegebenenfalls kann die Steuerungsmatrix auch mehrere Steuerungsvektoren für dasselbe Ziel enthalten, wenn aufgrund von Reflexionen an Leitplanken oder dergleichen mehrere optische Pfade von demselben Ziel zum Radarsensor führen.

Im Fall eines Einzelziels mit nur einem Pfad vereinfacht sich diese Gleichung zu

$$q^2(\theta) = \|\underline{a}^H(\theta) \, \underline{x}\|^2 / ( \| \underline{a}(\theta)\|^2 \, \|\underline{x}\|^2 ) \tag{10}$$

Der Steuerungsvektor $\underline{a}(\theta)$ kann vor Inbetriebnahme des Radarsensors gemessen und normiert werden. Der Signalsektor $\underline{x}$ kann jeweils nach erfolgter Messung ebenfalls normiert werden. Im folgenden soll deshalb angenommen werden, dass sowohl der Steuerungsvektor als auch der Signalvektor normiert sind, womit sich die Gleichung weiter vereinfacht zu:

$$q^2(\theta) \quad = \quad \|\underline{a}^H(\theta) \, \underline{x}\|^2$$
$$\tag{11}$$

Der Vektor $\underline{x}$ kann geschrieben werden als

$$\underline{x} = \{\underline{xi}\},\ i = 1 \ldots N_{tx} \tag{12}$$

Darin sind $\underline{xi}$ die Vektoren, die die Messsignale angeben, die vom i-ten Sende-Antennenelement gesendet wurden und von den $N_{rx}$ Empfangs-Antennenelementen empfangen wurden. Für eine (Einziel-) MIMO-Winkelschätzung mit allen Sende-Antennenelemente 12 erhält man dann die Gütefunktion

$$q^2(\theta) \quad = \quad \|\underline{a}^H(\theta) \, \underline{x}\|^2 \quad = \quad |\textstyle\sum_i a_{tx,i}^{*}(\theta) \, \underline{a}_{rx}^H(\theta) \, \underline{xi}|^2 \tag{13}$$

Darin läuft die Summe über alle $N_{tx}$ Sende-Antennenelemente (Summationsindex i), und $a_{tx,i}^{*}(\theta)$ ist das komplex Konjugierte der einzelnen Komponente $a_{tx,i}(\theta)$ des Sende-Steuerungsvektors $\underline{a}_{tx}(\theta)$. Die letzte Umformung in Gleichung (13) folgt aus Gleichung (2).

Definiert man nun Größen $y_i(\theta)$ als:

$$y_i(\theta) = \underline{a}_{rx}^H(\theta) \, \underline{xi} \tag{14}$$

so folgt aus Gleichung (13):

$$q^2(\theta) \quad = \quad |\textstyle\sum_i a_{tx,i}^{*}(\theta) \, y_i(\theta)|^2 \tag{15}$$

Bei einer Einziel-SIMO-Winkelschätzung, die nur mit dem i-ten Sende-Antennenelement ausgeführt wird, erhält man (mit Normierung):

$$q^2 \quad = \quad \|y_i(\theta)\|^2/\|\underline{xi}\|^2. \tag{16}$$

Anhand dieser Winkelgüte kann nun entschieden werden, ob bei der Winkelschätzung eine Einzelsituation oder eine Mehrzielsituation vorliegt. Bei der Mehrzielsituation wird die Gütefunktion einen deutlich kleineren Wert haben. Zur Entscheidung kann deshalb das Kriterium benutzt werden, dass die Gütefunktion bei dem geschätzten Winkel $\theta$ unterhalb eines geeignet gewählten Schwellenwertes liegt.

Wahlweise können jedoch auch andere Methoden und Kriterien herangezogen werden, um zwischen einer Einzelsituation und einer Mehrzielsituation zu unterscheiden.

Wenn man das Signalrauschen vernachlässigt, so gilt für den wahren Winkel $\theta$ näherungsweise:

$$\underline{xi} \quad = s \ a_{tx,i}(\theta) \, \underline{a}_{rx}(\theta) \tag{17}$$

wobei s die komplexe Amplitude des vom Ziel emittierten Signals darstellt und θ der tatsächliche Winkel des Ziels ist.

Setzt man Gleichung (17) in Gleichung (14) ein, so erhält man:

$$y_i(\theta) = \underline{a}_{rx}{}^H(\theta) \, s \, a_{tx,i}(\theta) \, \underline{a}_{rx}(\theta) \qquad (18)$$

Da $\underline{a}_{rx}(\theta)$ normiert ist, vereinfacht sich dies zu

$$y_i(\theta) = s \, a_{tx,i}(\theta) \qquad (19)$$

Wenn man nun nacheinander SIMO-Messungen mit jedem der Sende-Antennenelemente 12 durchführt, erhält man $N_{tx}$-Beziehungen der in Gleichung (19) angegebenen Art. Es lässt sich aber noch nicht unmittelbar überprüfen, ob und wie genau diese Beziehungen (19) erfüllt sind, da die Amplitude s nicht bekannt ist. Dieses Problem lässt sich jedoch dadurch umgehen, dass man die Vektoren auf der linken und der rechten Seite der Gleichung (19) jeweils durch eine einzelne ihrer Komponenten dividiert (ohne Einschränkung der Allgemeinheit durch die erste Komponente $a_{tx,1}(\theta)$ bzw. $y_1(\theta)$). Man erhält dann:

$$a_{tx,n}(\theta)/a_{tx,1}(\theta) = y_n(\theta)/y_1(\theta) \qquad (20)$$

Die Größen auf der linken Seite der Gleichung (20) sind die Komponenten des relativen Sende-Steuerungsvektors $a_{tx}{}'(\theta)$. Die Größen auf der rechten Seite erhält man gemäß Gleichung (14) aus den Messergebnissen $\underline{x}i$ und den bekannten, ursprünglich verwendeten Empfangs-Steuerungsvektor $\underline{a}_{rx}(\theta)$.

Eine Nachkalibrierung ist deshalb einfach Möglich, indem der bisher verwendete relative Sende-Steuerungsvektor $\underline{a}_{tx}{}'(\theta)$ durch den Vektor mit den Komponenten $y_n(\theta)/y_1(\theta)$ ersetzt wird. Ebenso einfach kann anhand der Abweichung zwischen dem alten und dem neuen relativen Sende-Steuerungsvektor festestellt werden, wie stark das bisher verwendete Antennendiagramm verfälscht war.

Bei der oben beschriebenen Prozedur muss zunächst eine kohärente Summation ($y_i(\theta) = \underline{a}^H{}_{rx}(\theta) \, \underline{x}i$) ausgeführt werden und anschließend das Verhältnis $y_n(\theta)/y_1(\theta)$ gebildet werden. Im allgemeinen entsteht jedoch nur ein tolerierbar kleiner Fehler, wenn man die Rechnung vereinfacht, indem man zunächst die Verhältnisse $X_{n,k}/X_{1,k}$ berechnet und anschließend über alle k (d.h. über alle Empfangs-Antennenelemente) mittelt. Näherungsweise können deshalb anstelle von Gleichung (20) auch die folgenden Beziehungen verwendet werden:

$$a_{tx,n}(\theta)/a_{tx,1}(\theta) = (1/N_{rx}) \sum_k (x_{n,k}/x_{1,k}) \qquad (21)$$

Darin ist $X_{n,k} = (\underline{x}n)_k = x_j$, mit $j = (k-1)N_{tx} + n$, die n-te Komponente des Teilvektors $\underline{x}n$ von $\underline{x}$.

Im Kern umfasst das erfindungsgemäße Verfahren somit die folgenden Schritte:

- Berechnen einer ersten, von den Komponenten des Sende-Steuerungsvektors $\underline{a}_{tx}(\theta)$ abhängigen Vergleichsgröße (z. B. $a_{tx,n}(\theta)/a_{tx,1}(\theta)$) für jedes Sende-Antennenelement (mit dem Index n),

- Berechnen einer zweiten, von den Ergebnissen der SIMO-Messungen abhängigen Vergleichsgröße (z. B. $y_n(\theta)/y_1(\theta)$ oder $\sum_k (X_{n,k}/x_{1,k})$) für jedes Sende-Antennenelement, und

- Korrigieren des Sende-Steuerungsvektors $\underline{a}_{tx}(\theta)$ (oder äquivalent dazu des relativen Sende-Steuerungsvektors $\underline{a}'_{tx}(\theta)$) anhand einer bekannten Beziehung (Gleichung (20) oder (21)) zwischen den ersten und zweiten Vergleichsgrößen für jedes Sende-Antennenelement.

Ein analoges Verfahren ermöglicht auch eine Kalibrierung oder Nachkalibrierung des Empfangs-Antennendiagramms, d.h. des Empfangs-Steuerungsvektors $\underline{a}_{rx}$.

An die Stelle der Gleichung (13) tritt dabei:

$$q^2(\theta) = |\sum_i a_{tx,i}{}^*(\theta) \, \underline{a}_{rx}{}^H(\theta) \, \underline{x}i|^2 = |\underline{a}_{rx}{}^H(\theta) \, \underline{x}'(\theta)|^2 \qquad (22)$$

mit

$$\underline{x}'(\theta) \quad = \quad \sum_i \; a_{tx,i}{}^*(\theta) \; \underline{xi} \tag{23}$$

und analog zu Gleichung (12):

$$\underline{x}' = \{\underline{xn'}\}, \; n = 1 \ldots N_{rx} \tag{23}$$

Bei einer Einziel-MISO-Winkelschätzung (Multiple Input Single Output), die nur mit dem n-ten Empfangs-Antennenelement ausgeführt wird, erhält man (mit Normierung):

$$q^2 \quad = \quad \Box \underline{xn'} \Box^2 \; / \; ( \; \sum_i \; |\; \underline{xn'}_i \;|^2 \; )^{-1/2} \tag{24}$$

Wieder kann man anhand der Winkelgüte entscheiden, ob bei der Winkelschätzung eine Einzelsituation oder eine Mehrzielsituation vorliegt.

Wenn eine Einzelsituation vorliegt und man das Signalrauschen vernachlässigt, so gilt für den wahren Winkel $\theta$ näherungsweise:

$$\underline{xi} \; = s \; a_{tx,i}(\theta) \; \underline{a}_{rx}(\theta) \tag{25}$$

Eine Rechnung analog zu Gleichungen (18) bis (20) führ dann auf:

$$a_{rx,n}(\theta)/a_{rx,1}(\theta) \; = \; x'_n(\theta)/x'_1(\theta) \tag{26}$$

Die ersten Vergleichsgrößen sind in diesem Fall also die Komponenten $a_{rx,n}(\theta)/a_{rx,1}(\theta)$ eines relativen Empfangs-Steuerungsvektors $\underline{a}''_{rx}$ (definiert analog zu Geleichung (6)). Die zweiten Vergleichsgrößen, die nun von den Ergebnissen der MISO-Messungen abhängig sind, werden durch die Größen $x'_n(\theta)/x'_1(\theta)$ für jedes Empfangs-Antennenelment (Index n) gebildet.

Als gute Näherung kann man auch in diesem Fall die Vergleichsgrößen und Beziehungen analog zu Gleichung (21) verwenden:

$$a_{rx,n}(\theta)/a_{rx,1}(\theta) \; = \; (1/N_{tx}) \sum_k \; (x_{k,n}/x_{k,1}) \tag{27}$$

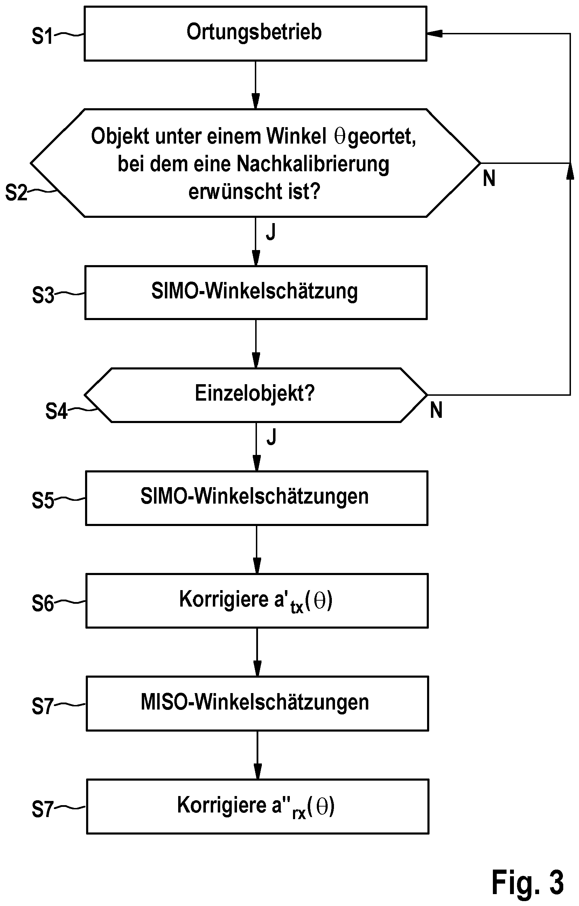

In Fig. 3 ist eine komplette Kalibrierungsprozedur dargestellt, die während einer Fahrt mit dem Kraftfahrzeug ausgeführt werden kann, das den Radarsensor 10 aufweist.

In Schritt S1 wird zunächst der normale Ortungsbetrieb durchgeführt, d.h., Objekte im Umfeld des Fahrzeugs werden mit Hilfe des Radarsensors 10 geortet. Dabei werden für die georteten Objekte Mehrziel-Winkelschätzungen auf der Grundlage des Antennendiagramms durchgeführt, das ursprünglich bei Inbetriebnahme des Radarsensors vermessen wurde oder bei vorausgegangenen Nachkalibrierungsprozeduren neu kalibriert wurde.

In Schritt S2 wird geprüft, ob im aktuellen Ortungszyklus ein Objekt bei einem Winkel geortet wurde, für den noch keine Nachkalibrierung stattgefunden hat oder die letzte Nachkalibrierung bereits eine gewisse Zeit zurückliegt.

Wenn das der Fall ist (J), wird in Schritt S3 eine SIMO-Messung und Winkelschätzung mit einem der Sende-Antennenelemente 12 ausgeführt. Andernfalls (N) erfolgt ein Rücksprung zu Schritt S1, und die Schleife mit den Schritten S1 und S2 wird so lange durchlaufen, bis ein Objekt unter einem Winkel gefunden wird, für den eine Nachkalibrierung stattfinden soll.

Anhand der Winkelgüte bei der in Schritt S3 durchgeführten SIMO-Winkelschätzung wird in Schritt S4 entschieden, ob es sich bei den unter dem Winkel $\theta$ georteten Objekt um ein Einzelobjekt handelt oder nicht.

Wenn es kein Einzelobjekt ist (N), erfolgt wieder ein Rücksprung in die Schleife mit den Schritten S1 und S2. Wenn es sich um ein Einzelobjekt handelt (J), werden in Schritt S5 weitere SIMO-Messungen mit allen Sende-Antennenelementen 12 vorgenommen. Auf diese Weise erhält man einen kompletten Satz der Größen $y_i(\theta)$ für alle Sende-Antennenelemente. Anhand der daraus gebildeten Vergleichsgrößen wird dann im Schritt S6 der (relative) Sende-Steuerungssektor $a'_{tx}(\theta)$ korrigiert (neu kalibriert).

Wahlweise kann sich noch ein Schritt S7 anschließen, in dem für dasselbe Objekt MISO-Messungen mit sämtlichen Empfangs-Antennenelementen durchgeführt werden. Auf der Grundlage dieser Messungen wird dann in Schritt S8 auch der (relative) Empfangs-Steuerungsvektor a''$_{rx}$($\theta$) korrigiert.

Sofern das Zeitmultiplex-Verfahren verwendet wird, sollten die zeitlichen Abstände zwischen den einzelnen SIMO-Messungen bzw. MISO-Messungen nicht zu groß sein, damit Fehler, die durch etwaige Ortsverlagerungen des Objektes in der zwischen den Messungen vergangenen Zeit nicht zu einem signifikanten Fehler führen. Es ist jedoch möglich, die Messungen zeitlich so zu verschachteln und/oder die Messergebnisse so zu kombinieren, dass sich die durch den Zeitversatz verursachten Fehler herausmitteln.

Ein analoges Problem entsteht auch beim Frequenzmultiplex-Verfahren, da hier der Abstand des Ziels in Verbindung mit dem Frequenzversatz zwischen den Sende-Antennenelementen zu einer Phasendifferenz zwischen den Grüßen y$_i$($\theta$) führen kann, die gegebenenfalls kompensiert werden muss.

## Patentansprüche

1. Verfahren zur Kalibrierung eines Antennendiagramms eines MIMO-Radarsensors (10) mit N$_{tx}$ Sende-Antennenelementen (12) und N$_{rx}$ Empfangs-Antennenelementen (14), mit den Schritten:

   vor Inbetriebnahme des Radarsensors:

   - Speichern eines Antennendiagramms, das jedem von mehreren Winkeln $\theta$ einen jeweiligen Steuerungsvektor a($\theta$) zuordnet, der sich zusammensetzt aus einem Sende-Steuerungsvektor $\underline{a}_{tx}$($\theta$) und einem Empfangs-Steuerungsvektor $\underline{a}_{rx}$($\theta$),

   nach Inbetriebnahme:

   - Ausführen einer Radarmessung zur Ortung eines Objekts (18),
   - Prüfen, ob das geortete Objekt ein Einzelziel oder ein Mehrfachziel ist,
   - wenn es ein Einzelziel ist:
   - Ausführen einer SIMO-Messung mit jedem der Sende-Antennenelemente,

   **gekennzeichnet durch** die folgenden weiteren Schritte:

   - Schätzen des Winkels $\theta$ des Objekts anhand der Messergebnisse,
   - Berechnen einer ersten, von den Komponenten des Sende-Steuerungsvektors $\underline{a}_{tx}$($\theta$) abhängigen Vergleichsgröße für jedes Sende-Antennenelement (12),
   - Berechnen einer zweiten, von den Ergebnissen der SIMO-Messungen abhängigen Vergleichsgröße für jedes Sende-Antennenelement (12), und
   - Korrigieren des Sende-Steuerungsvektors $\underline{a}_{tx}$($\theta$) anhand einer bekannten Beziehung zwischen den ersten und zweiten Vergleichsgrößen für jedes Sende-Antennenelement (12).

2. Verfahren nach Anspruch 1, bei dem zur Korrektur des Sende-Steuerungsvektors $\underline{a}_{tx}$($\theta$) die folgenden Beziehungen verwendet werden:

$$a_{tx,n}(\theta)/a_{tx,1}(\theta) \ = \ y_n(\theta)/y_1(\theta)$$

wobei $a_{tx,n}$($\theta$) die Komponenten des Sende-Steuerungsvektors $\underline{a}_{tx}$($\theta$) sind, $a_{tx,1}$($\theta$) eine beliebige dieser Komponenten ist und die Größen $y_n$($\theta$) für alle n = 1 ... N$_{tx}$ definiert sind durch

$$y_i(\theta) \ = \ \underline{a}_{rx}{}^H(\theta) \ \underline{xi}$$

wobei $\underline{a}_{rx}{}^H$($\theta$) der hermitesch konjugierte Vektor zu dem Empfangs-Steuerungsvektor $\underline{a}_{rx}$($\theta$) ist und $\underline{xi}$ ein Vektor ist, dessen Komponenten die komplexen Amplituden der Signale angeben, die vom i-ten Sende-Antennenelement (12) gesendet wurden und von den N$_{rx}$ Empfangs-Antennenelementen (14) empfangen wurden.

3. Verfahren nach Anspruch 1, bei dem zur Korrektur des Sende-Steuerungsvektors $\underline{a}_{tx}$($\theta$) die folgenden Beziehungen verwendet werden:

$$a_{tx,n}(\theta)/a_{tx,1}(\theta) \;=\; (1/N_{rx}) \sum_k (x_{n,k}/x_{1,k})$$

wobei $a_{tx,n}(\theta)$ die Komponenten des Sende-Steuerungsvektors $\underline{a}_{tx}(\theta)$ sind, $a_{tx,1}(\theta)$ eine beliebige dieser Komponenten ist und die Größen $x_{n,k}$ die komplexen Amplituden der Signale angeben, die vom n-ten Sende-Antennenelement (12) gesendet wurden und vom k-ten Empfangs-Antennenelement (14) empfangen wurden.

4.  Verfahren zur Kalibrierung eines Antennendiagramms eines MIMO-Radarsensors (10) mit $N_{tx}$ Sende-Antennenelementen (12) und $N_{rx}$ Empfangs-Antennenelementen (14), mit den Schritten:

    vor Inbetriebnahme des Radarsensors:

    - Speichern eines Antennendiagramms, das jedem von mehreren Winkeln $\theta$ einen jeweiligen Steuerungsvektor $\underline{a}(\theta)$ zuordnet, der sich zusammensetzt aus einem Sende-Steuerungsvektor $\underline{a}_{tx}(\theta)$ und einem Empfangs-Steuerungsvektor $\underline{a}_{rx}(\theta)$,

    nach Inbetriebnahme:

    - Ausführen einer Radarmessung zur Ortung eines Objekts (18),
    - Prüfen, ob das geortete Objekt ein Einzelziel oder ein Mehrfachziel ist,
    - wenn es ein Einzelziel ist:
    - Ausführen einer MISO-Messung mit jedem der Sende-Antennenelemente,

    **gekennzeichnet durch** die folgenden weiteren Schritte:

    - Schätzen des Winkels $\theta$ des Objekts anhand der Messergebnisse,
    - Berechnen einer ersten, von den Komponenten des Empfangs-Steuerungsvektors $\underline{a}_{rx}(\theta)$ abhängigen Vergleichsgröße für jedes Empfangs-Antennenelement (14),
    - Berechnen einer zweiten, von den Ergebnissen der MISO-Messungen abhängigen Vergleichsgröße für jedes Empfangs-Antennenelement (1e), und
    - Korrigieren des Empfangs-Steuerungsvektors $\underline{a}_{rx}(\theta)$ anhand einer bekannten Beziehung zwischen den ersten und zweiten Vergleichsgrößen für jedes Empfangs-Antennenelement (14).

5.  Verfahren nach Anspruch 4, bei dem zur Korrektur des Empfangs-Steuerungsvektors $\underline{a}_{rx}(\theta)$ die folgenden Beziehungen verwendet werden:

$$a_{rx,n}(\theta)/a_{rx,1}(\theta) \;=\; x'_n(\theta)/x'_1(\theta)$$

wobei $a_{rx,n}(\theta)$ die Komponenten des Empfangs-Steuerungsvektors $\underline{a}_{rx}(\theta)$ sind, $ar_{x,1}(\theta)$ eine beliebige dieser Komponenten ist und die Größen $x'_n(\theta)$ für alle $n = 1 \ldots N_{rx}$ definiert sind durch

$$x'_n(\theta) \;=\; \sum_i a_{tx,i}^{*}(\theta)\, \underline{xi}_n$$

wobei $\underline{a}_{tx,i}(\theta)$ die i-te Komponente des Sende-Steuerungsvektors $\underline{a}_{tx}(\theta)$ ist und $\underline{xi}$ ein Vektor ist, dessen Komponenten die komplexen Amplituden der Signale angeben, die vom i-ten Sende-Antennerielement (12) gesendet wurden und von den $N_{rx}$ Empfangs-Antennenelementen (14) empfangen wurden.

6.  Verfahren nach Anspruch 4, bei dem zur Korrektur des Sende-Steuerungsvektors $\underline{a}_{rx}(\theta)$ die folgenden Beziehungen verwendet werden:

$$a_{rx,n}(\theta)/a_{rx,1}(\theta) \;=\; (1/N_{tx}) \sum_k (x_{k,n}/x_{k,1})$$

wobei $a_{rx,n}(\theta)$ die Komponenten des Empfangs-Steuerungsvektors $\underline{a}_{rx}(\theta)$ sind, $a_{rx,1}(\theta)$ eine beliebige dieser Komponenten ist und die Größen $x_{k,n}$ die komplexen Amplituden der Signale angeben, die vom k-ten Sende-Antennenelement (12) gesendet wurden und vom n-ten Empfangs-Antennenelement (14) empfangen wurden.

**Claims**

1.  Method for calibrating an antenna diagram of an MIMO radar sensor (10) having $N_{tx}$ transmission antenna elements (12) and $N_{rx}$ reception antenna elements (14), having the steps of:

    prior to startup of the radar sensor:

    - storing an antenna diagram that assigns to each of multiple angles $\theta$ a respective control vector $\underline{a}(\theta)$ that is made up of a transmission control vector $\underline{a}_{tx}(\theta)$ and a reception control vector $\underline{a}_{rx}(\theta)$,

    following startup:

    - performing a radar measurement to locate an object (18),
    - checking whether the located object is a single target or a multiple target,
    - if it is a single target:
    - performing an SIMO measurement with each of the transmission antenna elements,

    **characterized by** the following further steps:

    - estimating the angle $\theta$ of the object on the basis of the measurement results,
    - computing a first comparison variable for each transmission antenna element (12), which comparison variable is dependent on the components of the transmission control vector $\underline{a}_{tx}(\theta)$,
    - computing a second comparison variable for each transmission antenna element (12), which comparison variable is dependent on the results of the SIMO measurements, and
    - correcting the transmission control vector $\underline{a}_{tx}(\theta)$ on the basis of a known relationship between the first and second comparison variables for each transmission antenna element (12).

2.  Method according to Claim 1, in which the transmission control vector $\underline{a}_{tx}(\theta)$ is corrected by virtue of the following relationships being used:

$$a_{tx,n}(\theta)/a_{tx,1}(\theta) \ = \ y_n(\theta)/y_1(\theta)$$

    where $a_{tx,n}(\theta)$ are the components of the transmission control vector $\underline{a}_{tx}(\theta)$, $a_{tx,1}(\theta)$ is any one of these components and the variables $y_n(\theta)$ for all $n = 1 ... N_{tx}$ are defined by

$$y_i(\theta) \ = \ \underline{a}_{rx}{}^H(\theta)\,\underline{xi}$$

    where $\underline{a}_{rx}{}^H(\theta)$ is the Hermitian conjugate vector for the reception control vector $\underline{a}_{rx}(\theta)$ and $\underline{xi}$ is a vector whose components indicate the complex amplitudes of the signals that have been sent by the i-th transmission antenna element (12) and have been received by the $N_{rx}$ reception antenna elements (14).

3.  Method according to Claim 1, in which the transmission control vector $\underline{a}tx(\theta)$ is corrected by virtue of the following relationships being used:

$$a_{tx,n}(\theta)/a_{tx,1}(\theta) \ = \ (1/N_{rx})\sum_k \quad (x_{n,k}/x_{1,k})$$

    where $a_{tx,n}(\theta)$ are the components of the transmission control vector $\underline{a}_{tx}(\theta)$, $a_{tx,1}(\theta)$ is any one of these components and the variables $x_{n,k}$ indicate the complex amplitudes of the signals that have been sent by the n-th transmission antenna element (12) and have been received by the k-th reception antenna element (14).

4.  Method for calibrating an antenna diagram of an MIMO radar sensor (10) having $N_{tx}$ transmission antenna elements (12) and $N_{rx}$ reception antenna elements (14), having the steps of:

prior to startup of the radar sensor:

- storing an antenna diagram that assigns to each of multiple angles $\theta$ a respective control vector $\underline{a}(\theta)$ that is made up of a transmission control vector $\underline{a}_{tx}(\theta)$ and a reception control vector $\underline{a}_{rx}(\theta)$,

following startup:

- performing a radar measurement to locate an object (18),
- checking whether the located object is a single target or a multiple target,
- if it is a single target:

  - performing an MISO measurement with each of the transmission antenna elements,

  **characterized by** the following further steps:

  - estimating the angle $\theta$ of the object on the basis of the measurement results,
  - computing a first comparison variable for each reception antenna element (14), which comparison variable is dependent on the components of the reception control vector $\underline{a}_{rx}(\theta)$,
  - computing a second comparison variable for each reception antenna element (1e), which comparison variable is dependent on the results of the MISO measurements, and
  - correcting the reception control vector $\underline{a}_{rx}(\theta)$ on the basis of a known relationship between the first and second comparison variables for each reception antenna element (14).

**5.** Method according to Claim 4, in which the reception control vector $\underline{a}_{rx}(\theta)$ is corrected by virtue of the following relationships being used:

$$a_{rx,n}(\theta) / a_{rx,1}(\theta) \ = \ x'_n(\theta) / x'_1(\theta)$$

where $a_{rx,n}(\theta)$ are the components of the reception control vector $\underline{a}_{rx}(\theta)$, $a_{rx,1}(\theta)$ is any one of these components and the variables $x'_n(\theta)$ for all $n = 1... N_{rx}$ are defined by

$$x'_n(\theta) \ = \ \sum_i \ a_{tx,i}^*(\theta) \, \underline{xi}_n$$

where $\underline{a}_{tx,i}(\theta)$ is the i-th component of the transmission control vector $\underline{a}_{tx}(\theta)$ and $\underline{xi}$ is a vector whose components indicate the complex amplitudes of the signals that have been sent by the i-th transmission antenna element (12) and have been received by the $N_{rx}$ reception antenna elements (14).

**6.** Method according to Claim 4, in which the transmission control vector $\underline{a}_{rx}(\theta)$ is corrected by virtue of the following relationships being used:

$$a_{rx,n}(\theta) / a_{rx,1}(\theta) \ = \ (1/N_{tx}) \sum_k \ (x_{k,n}/x_{k,1})$$

where $a_{rx,n}(\theta)$ are the components of the reception control vector $\underline{a}_{rx}(\theta)$, $a_{rx,1}(\theta)$ is any one of these components and the variables $x_{k,n}$ indicate the complex amplitudes of the signals that have been sent by the k-th transmission antenna element (12) and have been received by the n-th reception antenna element (14).

**Revendications**

**1.** Procédé d'étalonnage d'un diagramme d'antenne d'un capteur radar MIMO (10) comprenant $N_{tx}$ éléments d'antenne d'émission (12) et $N_{rx}$ éléments d'antenne de réception (14), comprenant les étapes suivantes :

avant la mise en service du capteur radar :

- mise en mémoire d'un diagramme d'antenne qui associe à chacun de plusieurs angles $\theta$ un vecteur de

commande $\underline{a}(\theta)$ correspondant, lequel se compose d'un vecteur de commande d'émission $\underline{a}_{tx}(\theta)$ et d'un vecteur de commande de réception $\underline{a}_{rx}(\theta)$,

après la mise en service :

- exécution d'une mesure au radar en vue de localiser un objet (18),
- contrôle si l'objet localisé est une cible unique ou une cible multiple,
- s'il s'agit d'une cible unique :

    - exécution d'une mesure SIMO avec chacun des éléments d'antenne d'émission,

**caractérisé par** les étapes supplémentaires suivantes :

    - estimation de l'angle $\theta$ de l'objet au moyen des résultats de la mesure,
    - calcul d'une première grandeur comparative pour chaque élément d'antenne d'émission (12), laquelle est dépendante du vecteur de commande d'émission $\underline{a}_{tx}(\theta)$,
    - calcul d'une deuxième grandeur comparative pour chaque élément d'antenne d'émission (12), laquelle est dépendante des résultats des mesures MIMO, et
    - correction du vecteur de commande d'émission $\underline{a}_{tx}(\theta)$ au moyen d'une relation connue entre les première et deuxième grandeurs comparatives pour chaque élément d'antenne d'émission (12).

2. Procédé selon la revendication 1, avec lequel les relations suivantes sont utilisées pour la correction du vecteur de commande d'émission $\underline{a}_{tx}(\theta)$ :

$$a_{tx,n}(\theta)/a_{tx,1}(\theta) = y_n(\theta)/y_1(\theta)$$

où $a_{tx,n}(\theta)$ désigne les composantes du vecteur de commande d'émission $a_{tx}(\theta)$, $a_{tx,1}(\theta)$ l'une quelconque de ces composantes et les grandeurs $y_n(\theta)$ pour tous les $n = 1 \ldots N_{tx}$ sont définies par

$$y_i(\theta) = \underline{a}_{rx}{}^H(\theta)\,\underline{xi}$$

où $\underline{a}_{rx}{}^H(\theta)$ désigne le vecteur conjugué hermitien pour le vecteur de commande de réception $\underline{a}_{rx}(\theta)$ et $\underline{xi}$ est un vecteur dont les composantes indiquent les amplitudes complexes des signaux qui ont été émis par l'i-ème élément d'antenne d'émission (12) et ont été reçus par les $N_{rx}$ éléments d'antenne de réception (14).

3. Procédé selon la revendication 1, avec lequel les relations suivantes sont utilisées pour la correction du vecteur de commande d'émission $\underline{a}_{tx}(\theta)$ :

$$a_{tx,n}(\theta)/a_{tx,1}(\theta) = (1/N_{rx})\sum_k \quad (x_{n,k}/x_{1,k})$$

où $a_{tx,n}(\theta)$ désigne les composantes du vecteur de commande d'émission $a_{tx}(\theta)$, $a_{tx,1}(\theta)$ l'une quelconque de ces composantes et les grandeurs $x_{n,k}$ indiquent les amplitudes complexes des signaux qui ont été émis par le n-ème élément d'antenne d'émission (12) et ont été reçus par le k-ème élément d'antenne de réception (14).

4. Procédé d'étalonnage d'un diagramme d'antenne d'un capteur radar MIMO (10) comprenant $N_{tx}$ éléments d'antenne d'émission (12) et $N_{rx}$ éléments d'antenne de réception (14), comprenant les étapes suivantes :

avant la mise en service du capteur radar :

- mise en mémoire d'un diagramme d'antenne qui associe à chacun de plusieurs angles $\theta$ un vecteur de commande $\underline{a}(\theta)$ correspondant, lequel se compose d'un vecteur de commande d'émission $\underline{a}_{tx}(\theta)$ et d'un vecteur de commande de réception $\underline{a}_{rx}(\theta)$,

après la mise en service :

- exécution d'une mesure au radar en vue de localiser un objet (18),
- contrôle si l'objet localisé est une cible unique ou une cible multiple,
- s'il s'agit d'une cible unique :

  - exécution d'une mesure MISO avec chacun des éléments d'antenne d'émission,

  **caractérisé par** les étapes supplémentaires suivantes :

  - estimation de l'angle $\theta$ de l'objet au moyen des résultats de la mesure,
  - calcul d'une première grandeur comparative pour chaque élément d'antenne de réception (14), laquelle est dépendante du vecteur de commande de réception $\underline{a}_{rx}(\theta)$,
  - calcul d'une deuxième grandeur comparative pour chaque élément d'antenne de réception (le), laquelle est dépendante des résultats des mesures MISO, et
  - correction du vecteur de commande de réception $\underline{a}_{rx}(\theta)$ au moyen d'une relation connue entre les première et deuxième grandeurs comparatives pour chaque élément d'antenne de réception (14).

5. Procédé selon la revendication 4, avec lequel les relations suivantes sont utilisées pour la correction du vecteur de commande de réception $\underline{a}_{rx}(\theta)$ :

$$a_{rx,n}(\theta)/a_{rx,1}(\theta) = x'_n(\theta)/x'_1(\theta)$$

où $a_{rx,n}(\theta)$ désigne les composantes du vecteur de commande de réception $a_{rx}(\theta)$, $a_{rx,1}(\theta)$ l'une quelconque de ces composantes et les grandeurs $x'_n(\theta)$ pour tous les n = 1 ... $N_{rx}$ sont définies par

$$n'_n(\theta) = \sum_i \underline{a}_{tx}{}^*(\theta)\,\underline{xi}_n$$

où $\underline{a}_{tx}{}^H(\theta)$ désigne l'i-ème composante du vecteur de commande d'émission $a_{tx}(\theta)$ et $\underline{xi}$ est un vecteur dont les composantes indiquent les amplitudes complexes des signaux qui ont été émis par l'i-ème élément d'antenne d'émission (12) et ont été reçus par les $N_{rx}$ éléments d'antenne de réception (14).

6. Procédé selon la revendication 4, avec lequel les relations suivantes sont utilisées pour la correction du vecteur de commande de réception $\underline{a}_{rx}(\theta)$ :

$$a_{rx,n}(\theta)/a_{rx,1}(\theta) = (1/N_{tx})\sum_k \ (x_{k,n}/x_{k,1})$$

où $a_{rx,n}(\theta)$ désigne les composantes du vecteur de commande de réception $a_{rx}(\theta)$, $a_{rx,1}(\theta)$ l'une quelconque de ces composantes et les grandeurs $x_{k,n}$ indiquent les amplitudes complexes des signaux qui ont été émis par le k-ème élément d'antenne d'émission (12) et ont été reçus par le n-ème élément d'antenne de réception (14).

Fig. 1

**Fig. 2**

S1 — Ortungsbetrieb

S2 — Objekt unter einem Winkel $\theta$ geortet, bei dem eine Nachkalibrierung erwünscht ist? — N

J

S3 — SIMO-Winkelschätzung

S4 — Einzelobjekt? — N

J

S5 — SIMO-Winkelschätzungen

S6 — Korrigiere $a'_{tx}(\theta)$

S7 — MISO-Winkelschätzungen

S7 — Korrigiere $a''_{rx}(\theta)$

Fig. 3

## IN DER BESCHREIBUNG AUFGEFÜHRTE DOKUMENTE

**In der Beschreibung aufgeführte Patentdokumente**

- WO 2012089385 A1

**In der Beschreibung aufgeführte Nicht-Patentliteratur**

- calibration strategy for a TDM FMCW MIMO radar system. **GUETLEIN JOHANNA et al.** 2013 IEEE INTERNATIONAL CONFERENCE ON MICROWAVES, COMMUNICATIONS, ANTENNAS AND ELECTRONIC SYSTEMS (COMCAS 2013). IEEE, 21. Oktober 2013, 1-5